Europäisches Patentamt

European Patent Office

Office européen des brevets

(19)

(11) **EP 0 807 661 B1**

(12) **EUROPEAN PATENT SPECIFICATION**

(45) Date of publication and mention
of the grant of the patent:
**02.08.2000  Bulletin 2000/31**

(51) Int Cl.⁷: **C08L 21/00**
// (C08L21/00, 23:06)

(21) Application number: **97303300.4**

(22) Date of filing: **15.05.1997**

(54) **Rubber composition**

Kautschukmischung

Composition de caoutchouc

(84) Designated Contracting States:
**DE FR GB IT**

(30) Priority: **16.05.1996  JP 12191596**

(43) Date of publication of application:
**19.11.1997  Bulletin 1997/47**

(73) Proprietor: **BRIDGESTONE CORPORATION**
**Tokyo 104-0031 (JP)**

(72) Inventor: **Mukai, Uchu**
**Kodaira-shi, Tokyo 187 (JP)**

(74) Representative: **Woods, Geoffrey Corlett et al**
**J.A. KEMP & CO.**
**Gray's Inn**
**14 South Square**
**London WC1R 5LX (GB)**

(56) References cited:
**US-A- 4 005 054**

• **PATENT ABSTRACTS OF JAPAN vol. 013, no.**
**595 (C-672), 27 December 1989 & JP 01 252645**
**A (BRIDGESTONE CORP), 9 October 1989,**
• **PATENT ABSTRACTS OF JAPAN vol. 016, no.**
**400 (C-0977), 25 August 1992 & JP 04 132751 A**
**(BRIDGESTONE CORP), 7 May 1992,**

## EP 0 807 661 B1

**Description**

The present invention relates to a rubber composition suitable for tires, and rubber vibration insulators.

As one of the properties required for the tread of tires, cut resistance is given. This property is especially important when tires are used on roads in bad condition, construction sites or the like which are likely to give visible injuries to tires. As a direction toward the improvement of the cut resistance of tread, to improve the hardness of rubber composition and, at the same time, to make the elongation at break larger have been believed to be effective. For improving the hardness of rubber composition, techniques may be considered in which the crosslinking density is increased by mixing carbon black at a high ratio, increasing the content of sulfur.

According to these techniques, however, the elongation at break is decreased and there occurs a phenomenon called chipping, i.e., rubber chips come off from a tire. In order to improve this property, various tests such as the use of a thermoplastic resin, a thermosetting resin, etc. have been made. However, these attempts often have not been able to achieve a desirable result in other properties, particularly in heat resistance and heat build-up. Thus, sufficient effects have not necessarily been obtained. For example, as seen in Japanese Unexamined Patent Publication No. 48-38338, the compatibility of cut resistance and heat build-up was achieved, but durability and heat resistance were not sufficient.

Not only in the tread of tires but also in other portions of tires, it is important to allow high hardness, heat resistance and low heat build-up to coexist. However, it is an extremely difficult assignment to achieve.

In rubber products other than tires, the coexistence of high hardness and low heat build-up is also required, for example, for rubber vibration insulators, particularly, a rubber for the suspension of vehicles.

As specific examples of pneumatic tires in which polyethylene is mixed, USP 4,675,349 and USP 5,341,863 are given. The former is characterized by mixing a polyethylene having a softening point of 135°C or above at a temperature lower than that. In this case, inevitably, the polyethylene should be added in the form of fine particles. Such a polyethylene is difficult to handle at the time of mixing. Furthermore, when mixed, polyethylene particles may aggregate to thereby worsen the physical properties of the resultant compound. The latter is characterized by using LDPE (low density polyethylene) of which the melting point of the crystal falls within a range of 104-115°C . In this case, changes in the physical properties of the resultant rubber composition are drastic at a high temperature, as described later in the description of the present invention. Therefore, the latter composition should be said difficult to use, in particular, as a rubber composition for tires.

Japanese Unexamined Patent Publication No. 7-266454 discloses a pneumatic tire in which LDPE or LLDPE (linear low density polyethylene) is mixed. In this case, changes in the physical properties of the resultant rubber composition are also drastic at a high temperature, and this composition should be said difficult to use, in particular, as a rubber composition for tires.

Generally, when a polyethylene having a low melting point is used, permanent set in fatigue attributable to the creep of the polyethylene is observed in the resultant rubber composition in addition to the above-mentioned problems. Thus, the use of such a polyethylene is not appropriate. US-A- 4 005 054 (D1) discloses a process, in which a polyethylene and a rubber are mixed at a temperature which is higher than the melting point of said polyethylene component such that fibriles or fibers are obtained. JP-A-01 252 645 discloses a process, in which a polyethylene is preheated above a temperature higher than its softening point and mixed with a styrene rubber. The composition is then further kneaded at high temperatures.

It is an object of the present invention to provide a rubber composition in which the coexistence of low heat build-up, heat resistance, high hardness and resistance to the permanent set can be achieved without damaging failure characteristics.

In order to allow low heat build-up, heat resistance, high hardness and resistance to the parmanent set to coexist in a rubber composition, a material (polyethylene in the present invention) to be mixed with the matrix rubber composition has to satisfy the following four essential conditions:

(1) Having a high affinity with the matrix rubber. This influences on basic reinforcing properties and heat build-up.
(2) Having an elastic modulus by far higher than that of matrix rubber composition. This influences on hardness.
(3) Being unsusceptible to phase transition and various chemical reactions at a temperature within the range of usual use.
(4) Not deformed plastically against a minute input. This influences on resistance to the permanent set.

Focusing the attention on the essential conditions described above, the present inventor has made intensive and extensive researches on the blending of various polyethylene resins with rubber. As a result, the inventor has found a rubber composition in which the properties described above coexist. Accordingly, the present invention provides a process for producing a rubber composition which process comprises mixing a rubber component and from 2 to 75 parts by weight of a high density polyethylene component per 100 parts by weight of the rubber component, said

2

polyethylene component containing 20% by weight or more of a crosslinkable high density polyethylene, and effecting a kneading stage at a temperature which is higher than the melting point of the polyethylene component.

Also provided is a rubber composition obtainable by a process according to the invention.

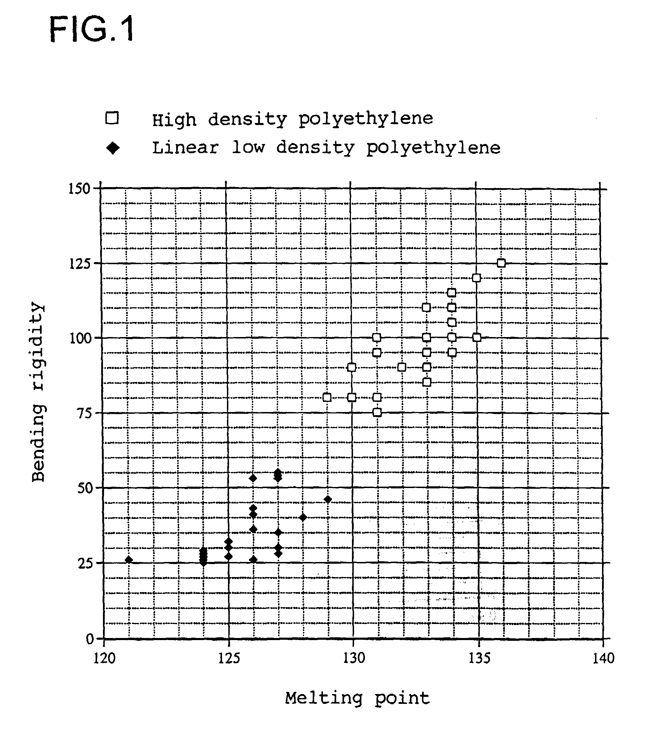

Fig. 1 shows the relationship between bending rigidity and melting point of polyethylene.

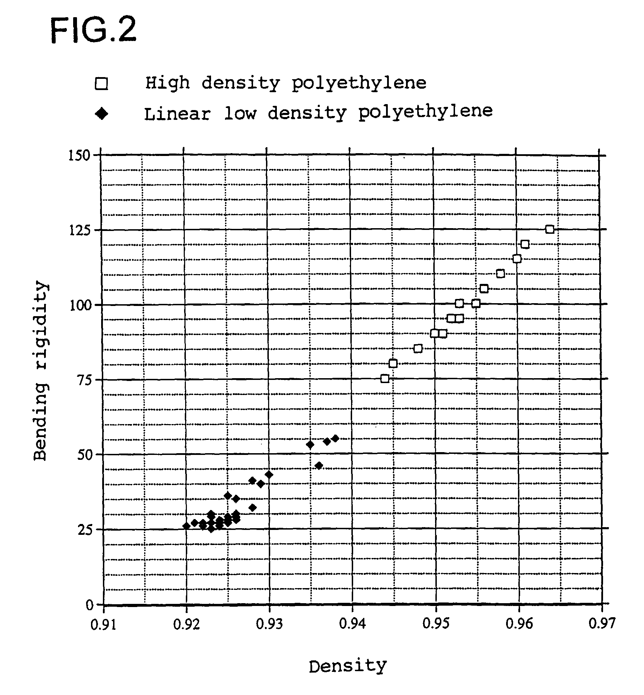

Fig. 2 shows the relationship between bending rigidity and density of polyethylene.

The rubber composition of the invention is characterized by mixing 2-75 weight parts of a high density polyethylene component (of which 20% by weight or more is a crosslinkable high density polyethylene) to 100 weight parts of the rubber component. Further, when the rubber composition is kneaded through several stages in the preparation, the rubber composition is characterized by being kneaded at least at one of the stages before the final stage so that the maximum temperature of the kneaded composition of said stage is higher than the melting point of the polyethylene component mixed therein. Typically, a kneading stage is effected at a temperature of 10°C or more higher than the melting point of the polyethylene component.

When a polyethylene other than high density polyethylene is mixed, a sharp decrease in elastic modulus, as described earlier, and a great increase in hysteresis loss (tan $\delta$) due to the melting of polyethylene crystals may occur at a temperature which rubber products such as tires and rubber vibration insulators will reach under ordinary conditions, which leads to a decrease in heat resistance.

When less than 2 weight parts polyethylene component is used, no clear difference is observed and the effect of the invention is not achieved. When more than 75 weight parts polyethylene component is used, the characteristics as a rubber composition are lost and, especially, fatigue properties, such as breaking life against repeated strain, become worse. Typically, the high density polyethylene component is present in an amount of from 10 to 75 parts by weight per 100 parts by weight of the rubber component. The high density polyethylene component may also be present in an amount of from 2 to 10 parts by weight per 100 parts by weight of the rubber component. Since sufficient resistance to the permanent set cannot be obtained if only a non-crosslinkable high density polyethylene has been added, it is necessary to inhibit plastic deformation by crosslinking to some extent the non-crystalline portion of the polyethylene in order to overcome this problem. Although the physical property of a rubber composition can be sufficiently improved by using a high density polyethylene which has been already crosslinked, the polyethylene should be added and mixed in the form of fine particles in this case in order to improve the dispersibility, which is not desirable in view of processability. Preferably, a high density polyethylene which undergoes crosslinking after being sufficiently dispersed in a matrix rubber is used.

Preferably, from 35 to 70% by weight of the high density polyethylene component is a crosslinkable high density polyethylene. The effect is small if the amount of crosslinkable high density polyethylene is less than 20% by weight of the total polyethylene amount and the improvement of physical properties become remarkable if the amount of crosslinkable high density polyethylene is 35% by weight or more. On the other hand, if the amount of crosslinkable high density polyethylene exceeds 70% by weight, a decrease in elastic modulus in the rubber composition occurs due to a decrease in the degree of crystallinity in the polyethylene portion, i.e., the improvement of the physical properties of the rubber composition as a whole almost reaches to the limit. When a high density polyethylene component of the rubber composition contains a crosslinkable polyethylene at a ratio of 35-70% by weight, the effect of the improvement of physical properties is most remarkable.

Kneading is typically performed through several stages. It is preferred that the said process comprises more than one kneading stage and the maximum temperature of the kneaded composition is higher than the melting point of the polyethylene component in at least one of the kneading stages before the final kneading stage, preferably, by 10°C or more. If kneaded at a lower temperature than the melting point of polyethylene, the viscosity of the polyethylene will be high and, as a result, the dispersibility of the polyethylene and the affinity thereof with the matrix rubber will be insufficient. These may result in a deterioration in the breaking characteristics of the resultant rubber composition.

Typically, the rubber component comprises one or more diene rubber such as natural rubber (NR), polyisoprene rubber (IR), polybutadiene rubber (BR) and styrene-butadiene copolymer (SBR). The above rubbers may be used independently or in combination. When the matrix rubber contains natural rubber or polyisoprene, the effect of the rubber composition of the invention becomes maximum.

Needless to say, the said mixture may further comprise one or more conventional additive including:a filler such as carbon black or silica; a softener such as aromatic oil or spindle oil; an anti-oxidant; a vulcanizing agent; a vulcanization accelerator; and a vulcanization activator.

The present invention also provides a tyre or a rubber vibration insulator which comprises a rubber composition according to the invention.

## EXAMPLES

Hereinbelow, the present invention will be described in more detail with reference to the following Examples and Comparative Examples. The present invention, however, is not limited to these Examples.

Rubber compositions were prepared using various polyethylene resins shown in Table 1 according to the mixing recipes shown in Tables 2 and 3. Each of the compositions was mixed and kneaded using a 250 ml LABO PLASTOMILL (manufactured by Toyoseiki Co.) and with 3 inch rolls. The mixing and kneading process consisted of two stages.

At the first stage, chemicals excluding those which greatly influence upon the crosslinking of the matrix rubber at a high temperature (e.g., a vulcanizing agent, vulcanization accelerator, and vulcanization activator), rubber component, polyethylene, carbon black were added. At the second stage, chemicals which were not added at the first stage were added and kneaded at a lower temperature than that of the first stage.

Then, the resultant composition was vulcanized and various measurements were carried out according to the methods described below. The vulcanizing conditions were at 145°C and for 30 minutes. The results are shown in Table 4.

(1) Characteristics of polyethylene

(a) Measurement of melting point (Tm)

The melting point (Tm) of a polyethylene was measured with a differential scanning calorimeter (Model DSC200 manufactured by Seiko Electronics Industry) at a nitrogen flow rate of 20 ml/min for the range from 20°C to 180°C at a heating rate of 10 °C /min. The melting point was defined as a temperature at which an endothermic peak converge.

(b) Measurement of melt flow rate

The measurement was conducted based on JIS K6760-1981.

(c) Bending rigidity

The measurement was conducted based on JIS K6760-1981 with an Olsen flow tester.

(2) Measurement of the temperature of a compound

The maximum temperature of the rubber compound of the first stage of kneading was measured using a thermocouple provided at the mill.

(3) Various physical properties of a rubber composition

(a) Measurement of hardness

Based on JIS K6301-1995, the spring type hardness (type A) was measured at 25°C.

(b) Tensile strength, at the time of breaking (Tb)

The measurement was based on JIS K6301-1995.

(c) Elongation at the time of breaking (Eb)

The measurement was based on JIS K6301-1995.

(d) Method for measuring permanent set

A vulcanized rubber sample of a dumbbell shape was deformed to 400% at 25 °C under tension mode at a rate of strain of 12.5% per second. Then, the load was removed and after 24 hours the length of the sample was measured. The permanent set was calculated by the formula given below. The reciprocal of the thus calculated values were reduced to index numbers in which the value for Comparative Example 1 is 100. This means that the greater the index number, the smaller the permanent set.

Permanent set (%) = (The length of the sample after the removal of the

load/The original length of the sample as cut off

from the rubber sheet) x 100

(e) Hysteresis loss characteristics

Using a dynamic mechanical analyzer manufactured by Rheometrics Corp., USA, Tan $\delta$ was measured after giving a sample a dynamic oscillation strain (amplitude: 1.0%; frequency: 15 Hz) at 50°C. The reciprocal of thus measured values were reduced to index numbers in which the value for Comparative Example 1 is 100. Accordingly, the greater the index number, the less the hysteresis loss and the lower the heat build-up.

Table 1.

| Characteristics of Polyethylene Resins | | | | |
|---|---|---|---|---|
| | A | B | C | D |
| Melting point (°C ) | 136 | 108 | 124 | 136 |
| Density | 0.964 | 0.920 | 0.923 | 0.958 |
| Bending rigidity (kg/cm$^2$) | 12,500 | 1,550 | 2,700 | 12,000 |
| A. High density polyethylene (Mitsubishi Chemical, Product Name: HJ560) B. Low density polyethylene (Mitsubishi Chemical, Product Name: HE30) C. Linear low density polyethylene (Mitsubishi Chemical, Product Name: UF340) D. Silane crosslinking polymer (Mitsubishi Chemical, Product Name: Linklon HF-700N) | | | | |

Table 2.

| | Weight part |
|---|---|
| Matrix rubber [*1] | 100 |
| Polyethylene | Variable |
| Carbon black (N330) | 50 |
| Aromatic oil | 3 |
| Stearic acid | 2 |
| Anti-oxidant 6C [*2] | 1 |
| Zinc oxide | 3 |
| Vulcanization accelerator DPG [*3] | 0.5 |
| Vulcanization accelerator DM [*4] | 0.6 |
| Sulfur | 1.5 |

[*1] IR2200, SBR1500 and BR01 (Japan Synthetic Rubber Co., Ltd.) were used independently or in combination.

[*2] N-(1,3-dimethylbutyl)-N'-phenyl-p-phenylenediamine

[*3] Diphenylguanidine

[*4] Dibenzothiazyldisulfide

Table 3.

| | IR2200 | SBR1500 | BR01 | C/B | Temp. (°C) | Polyethylene | |
|---|---|---|---|---|---|---|---|
| | | | | | | Kind | Amount (phr) |
| Comparative Example 1 | 100 | 0 | 0 | 50 | 150 | - | 0 |
| Comparative Example 2 | 50 | 50 | 0 | 50 | 150 | - | 0 |

Table 3. (continued)

| | IR2200 | SBR1500 | BR01 | C/B | Temp. (°C) | Polyethylene | | | |
|---|---|---|---|---|---|---|---|---|---|
| | | | | | | Kind | | Amount (phr) | |
| Comparative Example 3 | 50 | 0 | 50 | 50 | 150 | - | | 0 | |
| Comparative Example 4 | 100 | 0 | 0 | 50 | 155 | A | | 2 | |
| Comparative Example 5 | 100 | 0 | 0 | 50 | 155 | A | | 10 | |
| Comparative Example 6 | 100 | 0 | 0 | 50 | 155 | A | D | 0.5 | 0.5 |
| Example 1 | 100 | 0 | 0 | 50 | 155 | A | D | 1 | 1 |
| Example 2 | 100 | 0 | 0 | 50 | 155 | A | D | 8 | 2 |
| Example 3 | 100 | 0 | 0 | 50 | 155 | A | D | 7 | 3 |
| Example 4 | 100 | 0 | 0 | 50 | 155 | A | D | 6.5 | 3.5 |
| Example 5 | 100 | 0 | 0 | 50 | 155 | A | D | 5 | 5 |
| Example 6 | 100 | 0 | 0 | 50 | 155 | A | D | 3 | 7 |
| Example 7 | 100 | 0 | 0 | 50 | 155 | A | D | 0 | 10 |
| Comparative Example 7 | 100 | 0 | 0 | 50 | 155 | A | D | 40 | 40 |
| Comparative Example 8 | 100 | 0 | 0 | 50 | 155 | B | | 10 | |
| Comparative Example 9 | 100 | 0 | 0 | 50 | 155 | C | | 10 | |
| Comparative Example 10 | 100 | 0 | 0 | 50 | 155 | B | D | 5 | 5 |
| Comparative Example 11 | 100 | 0 | 0 | 50 | 155 | C | D | 5 | 5 |
| Example 8 | 50 | 50 | 0 | 50 | 155 | A | D | 5 | 5 |
| Example 9 | 50 | 0 | 50 | 50 | 155 | A | D | 5 | 5 |
| Example 10 | 100 | 0 | 0 | 45 | 155 | A | D | 5 | 5 |
| Example 11 | 100 | 0 | 0 | 50 | 145 | A | D | 5 | 5 |
| Comparative Example 12 | 100 | 0 | 0 | 50 | 155 | A | | 75 | |
| Example 12 | 100 | 0 | 0 | 50 | 155 | A | D | 40 | 35 |

(In the above Table, "Temperature" represents the maximum temperature of each compound during mixing and kneading. C/B means carbon black.)

Table 4.

| | Hardness | Tb | Eb | Permanent set | Tanδ |
|---|---|---|---|---|---|
| | | (M Pa) | (%) | | |
| Comparative Example 1 | 64 | 28.4 | 490 | 100 | 100 |
| Comparative Example 2 | 64 | 26.5 | 460 | 98 | 98 |
| Comparative Example 3 | 65 | 26.5 | 450 | 99 | 105 |
| Comparative Example 4 | 65 | 28.9 | 515 | 96 | 102 |

Table 4.   (continued)

| | Hardness | Tb | Eb | Permanent set | Tanδ |
|---|---|---|---|---|---|
| | | (M Pa) | (%) | | |
| Comparative Example 5 | 69 | 29.4 | 520 | 91 | 102 |
| Comparative Example 6 | 64 | 28.4 | 490 | 97 | 101 |
| Example 1 | 67 | 29.4 | 510 | 98 | 103 |
| Example 2 | 71 | 29.4 | 520 | 95 | 102 |
| Example 3 | 71 | 29.4 | 520 | 95 | 101 |
| Example 4 | 73 | 29.4 | 515 | 98 | 101 |
| Example 5 | 74 | 29.4 | 510 | 98 | 102 |
| Example 6 | 74 | 28.9 | 510 | 98 | 101 |
| Example 7 | 73 | 28.9 | 505 | 99 | 101 |
| Comparative Example 7 | 82 | 27.5 | 400 | * | 98 |
| Comparative Example 8 | 65 | 26.5 | 520 | 89 | 101 |
| Comparative Example 9 | 66 | 27.5 | 515 | 89 | 101 |
| Comparative Example 10 | 66 | 26.5 | 515 | 91 | 101 |
| Comparative Example 11 | 67 | 27.5 | 510 | 91 | 101 |
| Example 8 | 67 | 27.9 | 505 | 95 | 100 |
| Example 9 | 69 | 27.9 | 495 | 96 | 107 |
| Example 10 | 72 | 29.4 | 520 | 98 | 107 |
| Example 11 | 75 | 27.9 | 490 | 98 | 103 |
| Comparative Example 12 | 79 | 27.0 | 460 | 48 | 100 |
| Example 12 | 82 | 27.9 | 465 | 55 | 100 |

* As described previously, the sample had to be deformed up to 400%. Before that point, the sample has broken and thus the measurement of permanent set was impossible.

Comparative Example 1 is an example in which polyisoprene is used as the rubber component and no polyethylene resin is mixed at all. This example was used as a control for evaluating physical properties.

When Comparative Example 6 is compared with Examples 1-7, it is found that when the polyethylene content of a rubber composition is small, its hardness and Eb are low and that improvement effects over Comparative Example 1 cannot be obtained. When Comparative Example 7 is compared with Example 12, it is shown that when the polyethylene content exceeds 75% by weight, Eb decreases drastically and the balance among physical properties (hardness, Tb, Eb) is lost. Further, it is found that even if the ratio of a crosslinkable polyethylene is varied, an excellent performance is obtained as long as the ratio falls within the range specified by the present invention. Comparative Example 12 and Example 12 represent a system with a large polyethylene content. In these examples, it is also seen that physical properties are improved by the addition of a crosslinkable polyethylene.

When Comparative Examples 2 and 3 are compared with Examples 8 and 9, it is found that similar tendencies are also observed even if the matrix rubberes are different.

From Example 10, it is seen that the replacement of a part of carbon black with polyethylene is advantageous from the viewpoint of the compatibility of Tb with small tanδ. From Example 11, it is seen that failure characteristics will be affected unless the temperature of the kneaded compound is not higher than the melting point of the polyethylene resin by 10 °C or more.

Comparative Examples 4, 5, 8 and 9 are examples in which a crosslinkable polyethylene is not used. In Comparative Example 4, although resistance to the permanent set is not bad, hardness is not improved. In Comparative Example 5, although hardness is improved, resistance to the permanent set is bad. In Comparative Examples 8 and 9, both hardness and resistance to the permanent set are not good.

Although a crosslinkable polyethylene is mixed in Comparative Examples 10 and 11, a low density polyethylene is also contained. Therefore, they are inferior to Examples 5-7 in both hardness and resistance to the permanent set.

As is clear from the results shown in Table 4, Examples 1-12 satisfying the conditions of the present invention are rubber compositions in which the coexistence of low heat build-up, heat resistance, high hardness and resistance to the permanent set can be achieved without damaging failure characteristics.

On the other hand, in those rubber compositions as shown in Comparative Examples 1-12 which do not satisfy all of the conditions of the present invention, at least one of the following properties of failure characteristics, low heat build-up, heat resistance and high hardness become worse.

According to the present invention, a rubber composition obtained by mixing 2-75 weight parts of a high density polyethylene component (of which 20% by weight or more is a crosslinkable high density polyethylene) to 100 weight parts of the rubber component and kneading the resultant composition at a temperature which is higher than the melting point of said polyethylene component mixed, preferably, by 10°C or more improves the dispersion of the polyethylene into the matrix rubber composition and raises the interaction at interfaces between the polyethylene and the matrix rubber, to thereby allow the coexistence of low heat build-up, heat resistance, high hardness and resistance to the permanent set without damaging failure characteristics.

The high density polyethylene may be present in an amount from 2 to 10, or 10 to 75, parts by weight per 100 parts by weight of the rubber component. Thus the high density polyethylene may be present in an amount of from 10 to 60 parts by weight, such as 20 to 50 parts by weight, per 100 parts by weight of the rubber component.

**Claims**

1. A process for producing a rubber composition which process comprises mixing a rubber component and from 2 to 75 parts by weight of a high density polyethylene component per 100 parts by weight of the rubber component, said polyethylene component containing 20% by weight or more of a crosslinkable high density polyethylene, and effecting a kneading stage at a temperature which is higher than the melting point of the polyethylene component.

2. A process according to claim 1, wherein the temperature of the kneading stage is 10°C or more higher than the melting point of the polyethylene component.

3. A process according to claim 1 or 2, wherein from 35 to 70% by weight of the high density polyethylene component is a crosslinkable high density polyethylene.

4. A process according to any one of the preceding claims wherein the said process comprises more than one kneading stage and the maximum temperature of the kneaded composition is higher than the melting point of the polyethylene component in at least one of the kneading stages before the final kneading stage.

5. A process according to any one of the preceding claims wherein the rubber component comprises one or more of: natural rubber, polyisoprene rubber, polybutadiene rubber and styrene-butadiene copolymer.

6. A process according to any one of the preceding claims wherein the said mixture further comprises one or more of the following additives: a filler, a softener, an anti-oxidant, a vulcanising agent, a vulcanisation accelerator and a vulcanisation activator.

7. A process according to any one of the preceding claims wherein the high density polyethylene component is present in an amount of from 2 to 10 parts by weight per 100 parts by weight of the rubber component.

8. A process according to any one of claims 1 to 6 wherein the high density polyethylene component is present in an amount of from 10 to 75 parts by weight per 100 parts by weight of the rubber component.

9. A rubber composition obtainable by a process according to any one of the preceding claims.

10. A tyre or a rubber vibration insulator which comprises a rubber composition according to claim 9.

**Patentansprüche**

1. Verfahren zur Herstellung einer Kautschukzusammensetzung, umfassend das Mischen einer Kautschukkomponente und 2 bis 75 Gew.-Teilen einer Polyethylenkomponente hoher Dichte pro 100 Gew.-Teile der Kautschukkomponente, wobei die Polyethylenkomponente mindestens 20 Gew.-% vernetzbares Polyethylen hoher Dichte enthält, und Durchführen eines Knetschrittes bei einer Temperatur, die höher ist als der Schmelzpunkt der Polyethylenkomponente.

2. Verfahren nach Anspruch 1, wobei die Temperatur bei dem Knetschritt mindestens 10°C höher als der Schmelzpunkt der Polyethylenkomponente ist.

3. Verfahren nach Anspruch 1 oder 2, wobei 35 bis 70 Gew.-% der Polyethylenkomponente hoher Dichte vernetzbares Polyethylen hoher Dichte ist.

4. Verfahren nach einem der vorstehenden Ansprüche, wobei das Verfahren mehr als einen Knetschritt umfaßt und die maximale Temperatur der gekneteten Zusammensetzung in mindestens einem der Knetschritte vor dem letzten Knetschritt höher als der Schmelzpunkt der Polyethylenkomponente ist.

5. Verfahren nach einem der vorstehenden Ansprüche, wobei die Kautschukkomponente einen oder mehrere der Stoffe: natürlichen Kautschuk, Polyisoprenkautschuk, Polybutadienkautschuk und Styrol / Butadien-Copolymer umfaßt.

6. Verfahren nach einem der vorstehenden Ansprüche, wobei das Gemisch außerdem ein oder mehrere der nachstehenden Additive: einen Füllstoff, einen Weichmacher, ein Antioxidans, ein Vulkanisiermittel, einen Vulkanisationsbeschleuniger und einen Vulkanisationsaktivator umfaßt.

7. Verfahren nach einem der vorstehenden Ansprüche, wobei die Polyethylenkomponente hoher Dichte in einer Menge von 2 bis 10 Gew.-Teilen pro 100 Gew.-Teile der Kautschukkomponente vorliegt.

8. Verfahren nach einem der Ansprüche 1 bis 6, wobei die Polyethylenkomponente hoher Dichte in einer Menge von 10 bis 75 Gew.-Teilen pro 100 Gew.-Teile der Kautschukkomponente vorliegt.

9. Kautschukzusammensetzung, die nach einem Verfahren gemäß einem der vorstehenden Ansprüche erhältlich ist.

10. Reifen oder Kautschukschwingungsisolator, umfassend eine Kautschukzusammensetzung gemäß Anspruch 9.


**Revendications**

1. Procédé de fabrication d'une composition de caoutchouc, lequel procédé comprend le mélange d'un composant caoutchouc et de 2 à 75 parties en poids d'un composant polyéthylène haute densité pour 100 parties en poids du composant caoutchouc, ledit composant polyéthylène contenant 20% en poids ou davantage d'un polyéthylène haute densité réticulable, et l'opération consistant à effectuer un stade de malaxage à une température qui est supérieure au point de fusion du composant polyéthylène.

2. Proc`8e dé selon la revendication 1, dans lequel la température du stade de malaxage est de 10°C ou davantage supérieure au point de fusion du composant polyéthylène.

3. Procédé selon l'une des revendications 1 et 2, dans lequel de 35 à 70% en poids du composant polyéthylène haute densité est un polyéthylène haute densité réticulable.

4. Procédé selon l'une quelconque des revendications précédentes, dans lequel ledit procédé comprend plus d'un stade de malaxage et la température maximale de la composition malaxée est supérieure au point de fusion du composant polyéthylène dans au moins l'un des stades de malaxage avant le stade de malaxage final.

5. Procédé selon l'une quelconque des revendications précédentes, dans lequel le composant caoutchouc comprend un ou plusieurs parmi : le caoutchouc naturel, le caoutchouc polyisoprène, le caoutchouc polybutadiène et les copolymères styrène-butadiène.

**6.** Procédé selon l'une quelconque des revendications précédentes, dans lequel ledit mélange comprend en outre un ou plusieurs des additifs suivants : une charge, un plastifiant, un anti-oxydant, un agent de vulcanisation, un accélérateur de vulcanisation et un activateur de vulcanisation.

**7.** Procédé selon l'une quelconque des revendications précédentes, dans lequel le composant polyéthylène haute densité est présent dans une quantité de 2 à 10 parties en poids pour 100 parties en poids du composant caoutchouc.

**8.** Procédé selon l'une quelconque des revendications 1 à 6, dans lequel le composant polyéthylène haute densité est présent dans une quantité de 10 à 75 parties en poids pour 100 parties en poids du composant caoutchouc.

**9.** Composition de caoutchouc pouvant être obtenue par un procédé tel que défini à l'une quelconque des revendications précédentes.

**10.** Pneu ou isolateur de vibrations en caoutchouc qui comprend une composition de caoutchouc telle que définie à la revendication 9.

# FIG.1

□　High density polyethylene

◆　Linear low density polyethylene

# FIG.2

□     High density polyethylene

◆     Linear low density polyethylene